# DEMANDE DE BREVET EUROPEEN

(11) **EP 4 760 418 A1**
(43) Date de publication de la demande: **17.06.2026**
(21) Numéro de dépôt: 24219342.3
(22) Date de dépôt: 12.12.2024
(51) Int. Cl.: G04G 9/00, G04G 21/04, G04G 99/00

(54) **SYSTÈME DE NAVIGATION D'UNE MONTRE**

(71) Demandeur: ETA SA Manufacture Horlogère Suisse, 2540 Grenchen (CH)
(72) Inventeur: FLEURY, Emmanuel, 2740 Moutier (CH)
(74) Mandataire: ICB SA

(57) **Abrégé**

Un aspect de l'invention concerne un système (1) de navigation configuré pour guider un utilisateur sur un parcours conduisant à un lieu géographique déterminé, le système (1) comprenant une montre (2) et un dispositif électronique de géolocalisation (3) sans fil apte à générer des données de guidage relatives audit parcours, ladite montre (2) comportant un mouvement horloger électronique (4) et une interface d'affichage (5) mettant en oeuvre alternativement un mode d'affichage d'informations horlogères et un mode d'affichage d'informations de guidage résultant des dites données de guidage à partir d'au moins une première aiguille (7a) et d'une deuxième aiguille (7b) comprises dans ladite interface (5), lesdites informations de guidage étant relatives à des indications d'une direction de consigne à suivre pour atteindre ledit lieu géographique et à un temps de parcours estimé jusqu'au prochain changement de direction.

## Description

### Domaine technique de l'invention

La présente invention concerne un système de guidage d'une montre électronique, destinée à indiquer la direction d'un lieu géographique déterminé à un utilisateur qui la porte.

### Arrière-plan technologique

Les montres électroniques ont évolué afin d'intégrer de plus en plus de fonctions. L'une de ces fonctions est la fonction de positionnement par satellites en utilisant un module GPS. Un tel module GPS consiste en une puce associée à au moins une antenne, cette puce étant capable de capter les signaux d'au moins quatre satellites équipés de plusieurs horloges atomiques pour, en calculant les temps de propagation de ces signaux entre les satellites et elle, connaître sa distance par rapport à ceux-ci et, par trilatération, situer précisément en trois dimensions n'importe quel point placé en visibilité des satellites GPS.

Ce module GPS peut être utilisé pour deux applications spécifiques. La première application est une application de guidage c'est-à-dire que le module GPS est utilisé en coopération avec un logiciel de navigation afin de permettre de guider l'utilisateur d'un point de départ vers un point d'arrivée. Une deuxième application est la possibilité d'utiliser le module GPS dans une application de suivi notamment pour le sport c'est-à-dire permettre à l'utilisateur de savoir par où il est passé. La première application utilise le GPS pour indiquer le chemin à suivre alors que la deuxième application est utilisée pour le tracé parcouru.

Toutefois, cette intégration d'un module GPS dans une montre pose des problèmes. Le premier est qu'un module GPS consomme une grande quantité d'énergie électrique de sorte que les piles utilisées dans les montres se déchargent rapidement. Il devient donc nécessaire d'avoir des piles plus importantes ou d'utiliser des batteries rechargeables plus couteuses.

Le second problème est que ces applications nécessitent une certaine puissance de calcul pour fonctionner correctement. Or, l'augmentation de la puissance de calcul passe par l'utilisation de processeur plus performant et plus gourmand en énergie.

Dans ce contexte, on comprend donc qu'il existe un besoin de trouver une solution alternative.

### Résumé de l'invention

Un but de la présente invention est de proposer un système de navigation dans lequel une montre est apte à afficher alternativement des informations horlogères et des informations de guidage à partir de son aiguillage tout ayant une gestion efficace de sa consommation électrique.

Dans ce dessein, l'invention concerne un système de navigation configuré pour guider un utilisateur sur un parcours conduisant à un lieu géographique déterminé, le système comprenant une montre et un dispositif électronique de géolocalisation sans fil apte à générer des données de guidage relatives audit parcours, ladite montre comportant un mouvement horloger électronique et une interface d'affichage mettant en oeuvre alternativement un mode d'affichage d'informations horlogères et un mode d'affichage d'informations de guidage résultant des dites données de guidage à partir d'au moins une première aiguille et d'une deuxième aiguille comprises dans ladite interface, lesdites informations de guidage étant relatives à des indications d'une direction de consigne à suivre pour atteindre ledit lieu géographique et à un temps de parcours estimé jusqu'au prochain changement de direction.

Dans d'autres modes de réalisation :
- le mouvement horloger comprend une unité de traitement connectée à une boussole électronique, à un module de communication et à au moins un moteur pour animer d'un mouvement la première aiguille du mouvement horloger, l'unité de traitement exécutant un algorithme de guidage lors du mode d'affichage d'informations de guidage, orientant une extrémité libre de la première aiguille vers la direction de consigne à suivre pour atteindre ledit lieu géographique à partir des données de guidage reçues du dispositif électronique et des données d'orientation de la boussole électronique ;
- le mouvement horloger comprend une unité de traitement connectée à un module de diffusion sonore et à au moins un moteur pour animer d'un mouvement les aiguilles, l'unité de traitement exécutant un algorithme de guidage lors des modes d'affichage d'informations horlogères et de guidage, engendrant une notification d'un message visuel et sonore pour annoncer/avertir d'un changement de direction ;
- l'interface d'affichage comporte une échelle de temps et le mouvement comprend l'unité de traitement connectée audit au moins un moteur pour animer d'un mouvement la deuxième aiguille, ladite unité de traitement exécutant ledit algorithme de guidage lors du mode d'affichage d'informations de guidage, configurant le positionnement de la deuxième aiguille par rapport à ladite échelle de temps comprise dans l'interface d'affichage en indiquant le temps de parcours estimé jusqu'au prochain changement de direction ;
- lors du mode d'affichage d'informations de guidage la première aiguille est susceptible d'être animée d'un mouvement de rotation dans le sens horaire et le sens antihoraire en fonction des instructions de contrôle du mouvement de cette première aiguille générées par l'unité de traitement en fonction des données de guidage reçues du dispositif électronique et des données d'orientation de la boussole électronique ;
- lors du mode d'affichage d'informations de guidage la deuxième aiguille est animée en permanence d'un mouvement de rotation uniforme uniquement dans le sens horaire jusqu'à être superposée à la première aiguille où son mouvement s'arrête et ce, en fonction des instructions de contrôle du mouvement de cette deuxième aiguille générées par l'unité de traitement à partir d'un calcul du temps estimé du prochain changement de direction ;
- ladite interface d'affichage comprend un cadran, un rehaut et/ou une lunette chacun étant pourvu d'une échelle de temps ;
- ledit cadran comprend une partie incluant un écran configuré pour afficher les informations de guidage relatives audit lieu géographique telles que la topologie des intersections lors de changement de direction qui sont comprises dans le parcours et au temps restant pour atteindre une arrivée du parcours correspondant au lieu géographique ;
- le mouvement horloger comporte une unité de traitement et un moteur d'entrainent desdites aiguilles, ladite unité étant apte à piloter le moteur afin de positionner les aiguilles pour l'affichage de l'heure ou des informations relatives audit lieu géographique ;
- le mouvement comprend une unité de traitement connectée à des capteurs de mesures du mouvement susceptible d'être effectuée par la montre, l'unité de traitement exécutant un algorithme de sélection du mode d'affichage en fonction d'un premier mouvement de la montre spécifique à la sélection du mode d'affichage d'informations de guidage ou d'un deuxième mouvement de cette montre spécifique à la sélection du mode d'affichage d'informations horlogères ;
- lors du mode d'affichage d'informations horlogères la première aiguille est une aiguille des heures et la deuxième aiguille une aiguille des minutes ;
- le dispositif électronique de géolocalisation est configuré pour générer des données de guidage relatives audit parcours, lesdites données étant transmises à ladite montre.

### Brève description des figures

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une représentation graphique d'un système de navigation configuré pour guider un utilisateur sur un parcours conduisant à un lieu géographique navigation selon des modes de réalisation de l'invention ;
- la figure 2 est une représentation d'une montre du système configurée dans un mode d'affichage d'informations horlogères, selon des modes de réalisation de l'invention, et
- les figures 3 et 4 sont des représentations de la montre dans un mode d'affichage d'informations horlogères différentes, selon des modes de réalisation de l'invention.

### Description détaillée de l'invention

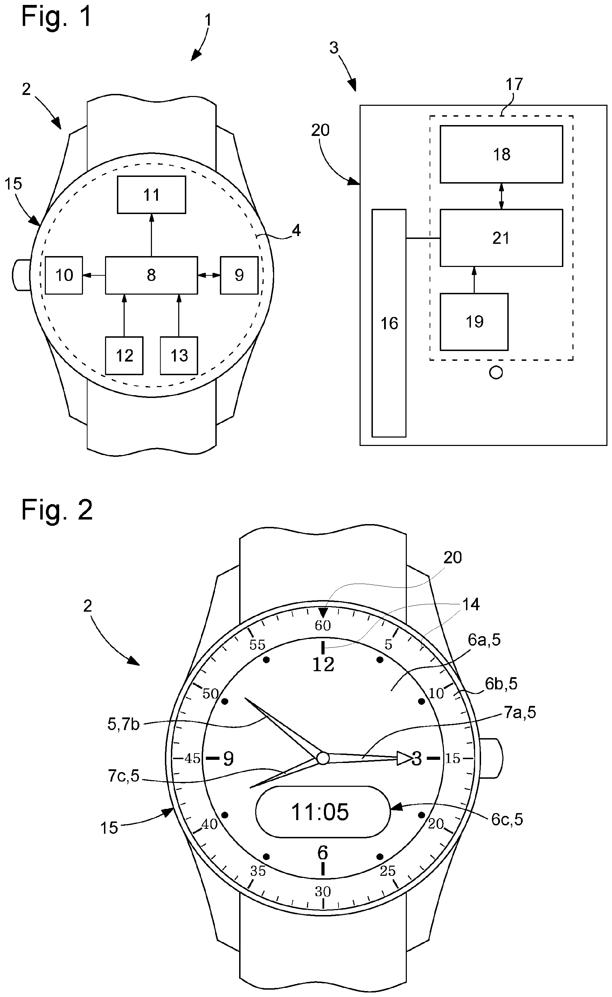

La figure 1 représente un système 1 de navigation configuré pour guider un utilisateur sur un parcours conduisant à un lieu géographique déterminé. Un tel système 1 comprend une montre 2 en particulier une montre électronique, et un dispositif électronique de géolocalisation 3 sans fil.

Dans ce système 1, ce dispositif 3 est configuré pour générer un parcours, un trajet ou encore un itinéraire, devant permettre de guider l'utilisateur vers le lieu géographique qui est le lieu d'arrivée ou de fin du parcours. Ce dispositif 3 est apte à transmettre à ladite montre 2 des données de guidage relatives à ce parcours. Ces données sont destinées à être utilisées par la montre 2 afin d'afficher ou diffuser des informations de guidage à l'utilisateur à mesure qu'il effectue son trajet pour arriver au lieu géographique selon le parcours généré par le dispositif 3.

En référence aux figures 1 à 4, la montre 2 est apte à afficher les informations de guidage relatives au parcours en particulier lorsque la montre 2 est orientée pour que ces informations de guidages affichées par cette montre 2 sont disposées dans le champ de vision de l'utilisateur qui est ici le porteur de ladite montre 2. On notera que cette montre 2 est apte à alterner entre deux modes d'affichage : un mode d'affichage d'informations horlogères comme l'affichage de l'heure ou encore de la date, et un mode d'affichage d'informations de guidage relatives à un parcours prédéfini conduisant audit lieu géographique.

Dans ce système 1, la montre 2 comprend un boitier 15 muni d'un bracelet. Dans ce boitier 15, sont agencés un mouvement horloger électronique 4 et une interface d'affichage 5.

Dans ces conditions, un tel mouvement horloger 4 comprend :
- une unité de traitement 8 comprenant un microcontrôleur ;
- un module de communication 9 ;
- une boussole électronique 12 ;
- des capteurs de mesures 13 d'au moins un mouvement susceptible d'être effectuée par la montre 2 tels qu'un accéléromètre et/ou un gyroscope ou encore une centrale inertielle de 3 à 6 axes ;
- un accumulateur d'énergie de type pile ou batterie ;
- au moins un moteur 10 tel qu'un micromoteur ou un nanomoteur électrique, et/ou
- un module de diffusion sonore 11 comprenant au moins un haut-parleur.

Dans ce système 1, l'interface d'affichage 5 comprend des éléments contribuant à afficher/diffuser des informations horlogères ou de guidage. Cette interface comprend de manière non limitative et non exhaustive un cadran 6a, un rehaut, une lunette 6b et un aiguillage. Un tel cadran 6a comprend une partie incluant un écran configuré pour afficher des informations de guidage relatives par exemple audit lieu géographique tels que la topologie des intersections lors de changement de direction de consigne qui sont comprises dans le parcours, et au temps restant pour atteindre l'arrivée du parcours qui est le lieu géographique. Cet écran peut mettre en oeuvre des technologies d'affichage de type LCD ou encore OLED.

Dans cette configuration, l'aiguillage comporte une première aiguille 7a, une deuxième aiguille 7b et une troisième aiguille 7c. Lorsque la montre 2 est configurée dans le mode d'affichage d'information horlogère, les première, deuxième et troisième aiguilles 7a, 7b, 7c sont respectivement une aiguille des heures, une aiguille des minutes et une aiguille des secondes. Lorsque cette montre 2 est configurée dans le mode d'affichage d'information horlogère, les première et deuxième aiguilles 7a, 7b sont respectivement une aiguille d'indication de la direction à suivre et une aiguille d'indication du temps de parcours estimé jusqu'au prochain changement de direction.

Ces aiguilles 7a, 7b sont chacune montées classiquement en l'une de leurs extrémités sur un arbre de rotation correspondant disposé au centre du cadran 6a afin de se déplacer au-dessus de ce cadran 6a. Cet arbre ou axe passe par le centre du cadran 6a en reliant l'aiguille 7a, 7b correspondante à un moteur 10. On notera que l'unité de traitement 8 est apte à piloter ledit au moins un moteur 10 afin de positionner les aiguilles 7a, 7b, pour l'affichage d'informations horlogères comme une heure, une alarme, une date, ou d'informations de guidage.

Dans cette interface, le cadran 6a, le rehaut et la lunette 6b peuvent chacun comprendre une partie/face visible incluant une échelle de temps 14 comportant des graduations temporelles, ladite échelle de temps 14 étant configurée pour coopérer avec une des deux aiguilles 7b notamment animées en permanence d'un mouvement de rotation uniforme, pour afficher une valeur relative à une durée comme on le verra par la suite. En particulier, un tel cadran 6a présente sur son pourtour extérieur des graduations horaires telles que des appliques et/ou index horaires, représentant de manière classique des heures et minutes.

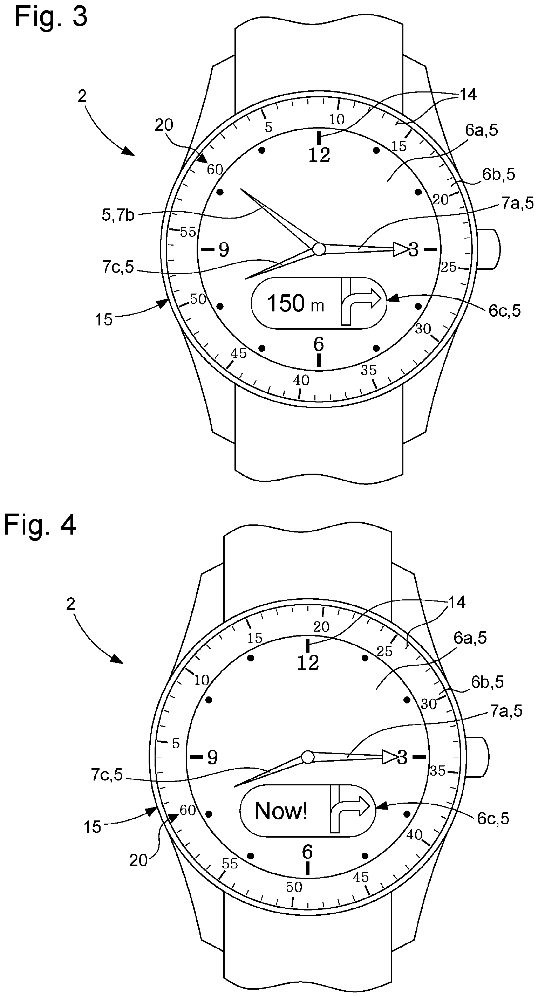

Dans cette interface la lunette 6b est une lunette rotative. Sur cette lunette 6b, les graduations temporelles définissent un intervalle de temps strictement égal à une heure ou encore supérieur à une heure. Sur cette lunette 6b, ces graduations temporelles peuvent comporter un index de positionnement de ladite lunette 6b relativement à la deuxième aiguille 7b, cet index définissant le début et la fin de cette échelle de temps 14, cette fin étant aussi indiquée par la position de la première aiguille 7a. Dans l'exemple représenté sur les figures 3 et 4, l'intervalle de temps est d'une heure et cette échelle de temps 14 est alors graduée de cinq minutes en cinq minutes. On comprend que dans d'autres variantes cet intervalle de temps pourrait être de manière non limitative et non exhaustive de deux, quatre, cinq ou encore six heures. Dans le mode d'affichage des informations de guidage, la deuxième aiguille 7b est apte à coopérer avec l'échelle de temps 14 pour donner à l'utilisateur un estimatif du temps de parcours estimé jusqu'au prochain changement de direction.

Dans une alternative cette lunette 6b peut être un affichage numérique mettant en oeuvre des technologies d'affichage de type LCD ou encore OLED. Cette lunette 6b est dans cette configuration connectée à l'unité de traitement 8. Dans ce contexte cette lunette 6b peut afficher différentes graduations temporelles définissant un intervalle de temps strictement égal à une heure ou encore supérieur à une heure. Dans le mode d'affichage d'information de guidage, cette graduation temporelle peut être dynamique en étant définie en fonction du temps de parcours estimé jusqu'au prochain changement de direction. Autrement dit, l'affichage de la graduation peut être fonction de ce temps estimé et dans ce cas un intervalle de temps correspondant exclusivement à ce temps estimé est alors sélectionné par l'unité de traitement 8. A titre d'exemple si ce temps estimé est de soixante minutes alors l'intervalle de temps sera strictement égal à soixante minutes avec une échelle de temps alors graduée de cinq minutes en cinq minutes. Par ailleurs, la graduation affichée peut évoluer à mesure que la distance jusqu'au prochain changement de direction diminue. Cette graduation temporelle peut aussi être affichée de manière croissante ou décroissante selon une configuration préalable dans laquelle l'utilisateur souhaite connaître le temps restant jusqu'au prochain changement de direction ou le temps écoulé depuis le dernier changement de direction lorsqu'il se dirige vers le prochain changement de direction.

En outre on notera que dans le mode d'affichage d'informations de guidage, la deuxième aiguille 7b autrement appelée « *aiguille d'indication de temps avant un changement de direction* » ou « *aiguille de notification de changement de direction* », est animée :
- en permanence d'un mouvement de rotation uniforme et/ou continu jusqu'à qu'elle soit agencée dans une position de superposition avec la première aiguille 7a, ou
- en permanence d'un mouvement circulaire uniforme et/ou continu jusqu'à qu'elle soit agencée dans une position de superposition avec la première aiguille 7a, ou
- d'un mouvement permanent de rotation uniforme et/ou continu jusqu'à qu'elle soit agencée dans une position de superposition avec la première aiguille 7a, ou
- d'un mouvement circulaire permanent uniforme et/ou continu jusqu'à qu'elle soit agencée dans une position de superposition avec la première aiguille 7a.

Dans ce mode d'affichage d'informations de guidage, ce mouvement de rotation est réalisé dans le sens horaire. Cette aiguille 7a est destinée/dédiée uniquement et spécifiquement à l'établissement de l'information de guidage relative à une estimation du temps de parcours jusqu'au prochain changement de direction, elle ne participe donc à la réalisation d'aucune autre fonction de la montre 2 dans le cadre de ce mode d'affichage.

Dans ce mouvement horloger 4, l'unité de traitement 8 comprend un microprocesseur et est connectée au module de communication 9, audit au moins un moteur 10, à la boussole électronique 12, au module de diffusion sonore 11, audits capteurs de mesures 13 d'au moins un mouvement susceptible d'être effectuée par la montre 2 et à l'accumulateur.

Une telle boussole électronique 12 comprend des capteurs du champ magnétique, qui fournissent des signaux de détection. Les signaux de détection des capteurs sont tout d'abord convertis en signaux numériques dans un convertisseur traditionnel AC/DC avant d'être fournis au microcontrôleur de l'unité de traitement 8 pour le calcul de la direction du Nord magnétique. Dans le cas d'une boussole électronique 12 composée de deux capteurs magnéto-inductifs, le convertisseur AC/DC n'est plus nécessaire, car un simple contrôleur permet d'interpréter directement les valeurs mesurées par ces deux capteurs.

Dans ce mouvement horloger 4, le module de communication 9 permet de communiquer avec le dispositif électronique de géolocalisation 3 sans fil en utilisant le même protocole de communication, ce dernier pouvant être du type Bluetooth ou NFC ou Wi-Fi.

Le dispositif électronique de géolocalisation 3 sans fil est de manière non limitative et non exhaustive : un traceur GPS nomade, un ordiphone, un ordinateur portable, une tablette électronique ou encore une phablette.

Ce dispositif 3 comprend un boitier 20 incluant un élément de saisie 16 tactile ou vocale et un module électronique 17 est agencé. Ce module électronique 17 est alimenté par une source d'énergie et est apte à exécuter une multitude de fonctions et à afficher des informations sur des moyens d'affichage. Ce module électronique 17 comporte un microprocesseur 21 et des éléments de mémoire comportant notamment des données cartographiques. Le module électronique 17 comprend en outre une unité de localisation 19 c'est-à-dire une unité munie d'une antenne et apte à recevoir des signaux de positionnement pouvant être satellites ou du type GSM et à les utiliser pour fournir des informations de géolocalisation. L'unité de localisation 19 peut utiliser le système 1 GPS ou GLONASS ou Galiléo et également une centrale inertielle ou encore un système 1 de triangulation à partir d'ondes radios (BLE, LTE).

Le microprocesseur 21 du module électronique 17 est configuré pour exécuter un algorithme de guidage susceptible de générer des données de guidage à partir des informations de géolocalisation et du parcours produit à partir des données cartographiques et topographiques permettant de conduire l'utilisateur de la montre 2 jusqu'au lieu déterminé qui a été enregistré à partir de l'élément de saisie 16 du dispositif 3.

Ces données de guidage comprennent des informations de navigation De telles informations comportent de manière non limitative et non exhaustive les composantes d'information suivantes :
- au moins une indication sur le temps estimé jusqu'au prochain changement de direction ;
- au moins une indication sur le changement de direction ;
- au moins une indication sur la topologie de chaque intersection comprise dans le parcours (carrefour, rond-point à plusieurs sorties, embranchement, etc).

On remarquera que le microprocesseur 21 du module électronique 17 calcule une estimation de ce temps jusqu'au prochain changement de direction en prenant en compte :
- un temps de réaction requis/nécessaire de l'individu à partir de la diffusion de la notification du changement de direction ;
- une distance de réaction par rapport à la localisation du changement de direction dans le parcours qui est par exemple défini par l'utilisateur.

Ce temps de réaction et la distance de réaction peuvent être configurés à partir de l'élément de saisie 16 du dispositif électronique 3 ou déterminés automatiquement par le module électronique 17 à partir de la topographie du parcours et de l'activité physique effectuée par l'utilisateur. Cette activité physique peut être enregistré dans le dispositif 3 à partir de l'élément de saisie 16 ou identifié automatiquement par le module électronique 17.

Ce dispositif 3 comprend en outre un module de communication 18 configuré pour communiquer avec ladite montre 2 et ce, en utilisant un protocole de communication pouvant être du type Bluetooth ou NFC ou Wi-Fi. Ainsi, ce dispositif 3 est apte à échanger des données avec ladite montre 2.

On notera que les données de guidage sont transmises par le dispositif électronique 3 à la montre 2 dès lors qu'une des composantes d'information est mise à jour par le module électronique 17 et ce, en fonction de l'évolution d'au moins un critère de progression/d'avancement de l'individu et donc de la montre 2 effectuant ce parcours tel que de manière non limitative et non exhaustive :
- une variation de la direction suivie par l'utilisateur par rapport à la direction de consigne, afin de tenir compte d'une erreur dans le suivie du parcours par l'individu et de proposer un parcours alternatif pour se rendre au lieu géographique ;
- une variation de la vitesse de progression du parcours afin de tenir compte des accélérations et des arrêts réalisées par l'individu.

Ainsi que nous l'avons évoqué précédemment, la montre 2 est apte à alterner entre les modes d'affichage d'informations horlogères et d'informations de guidage relatives au parcours. Plus précisément, cette alternance entre ces deux modes d'affichage est contrôlée par l'unité de traitement 8. Effectivement, en exécutant un algorithme de sélection de modes d'affichage, cette unité de traitement 8 est apte à déterminer le mode d'affichage dans lequel configurer cette montre 2 à partir de données de mouvement qu'il reçoit des capteurs de mesures 13 du mouvement susceptible d'être effectuée par la montre 2. En effet, en identifiant un premier mouvement particulier de la montre 2, cette dernière est alors configurée dans le mode d'affichage d'informations de guidage et en identifiant un deuxième mouvement particulier de cette montre 2, elle est alors configurée dans le mode d'affichage d'informations horlogères.

Lorsque la montre 2 est configurée dans un mode d'affichage de données de guidage, dès lors que l'unité de traitement 8 reçoit des données de guidage du dispositif 3, il génère des instructions de contrôle dudit au moins un moteur 10 correspondant pour animer d'un mouvement de rotation dans un sens horaire ou un sens antihoraire la première aiguille 7a afin d'orienter son extrémité libre vers la direction de consigne à suivre pour atteindre ledit lieu géographique. De telles instructions sont générées par l'exécution de l'algorithme de guidage qui effectue un traitement des données de guidage reçues à partir des données d'orientation de la boussole électronique 12.

Durant ce même mode d'affichage, à la réception de ces données de guidage du dispositif 3, il génère aussi des instructions de contrôle dudit au moins un moteur 10 correspondant pour animer d'un mouvement de rotation dans un sens horaire ou un sens antihoraire, la deuxième aiguille 7b afin de positionner son extrémité libre relativement à l'échelle de temps 14 du cadran 6a, du rehaut ou de la lunette 6b en fonction du temps de parcours estimé jusqu'au prochain changement de direction de consigne. De telles instructions sont générées par l'exécution de l'algorithme de guidage par l'unité qui effectue un traitement des données de guidage comprenant ce temps estimé par calcule par le dispositif 3. En effet, le microcontrôleur de ce dispositif 3 détermine cet estimatif d'un tel temps en exécutant un algorithme de génération de données de guidage utilisant des relevées de coordonnées de géolocalisation de ce dispositif 3 et donc la montre 2, et la distance qu'il y a entre les dernières coordonnées relevées et la localisation du prochain changement de direction dans le parcours.

On notera que lors du mode d'affichage d'informations de guidage une fois que cette deuxième aiguille 7b a été positionne relativement à l'échelle de temps 14 en fonction du temps estimé, cette aiguille 7b est alors animée en permanence d'un mouvement de rotation uniforme uniquement dans le sens horaire jusqu'à être superposée à la première aiguille 7a où son mouvement s'arrête. Elle est ensuite de nouveau positionnée relativement à cette échelle de temps 14 en prévision du prochain changement de direction.

Lorsque la montre 2 est configurée dans le mode d'affichage d'information de guidage ou dans le mode d'affichage d'informations horlogères, l'unité de traitement 8 en exécutant l'algorithme de guidage est apte à générer une notification d'un message visuel et sonore pour annoncer/avertir d'un changement de direction sur la base de la dernière estimation du temps calculée pour le prochain changement de direction.

### Nomenclature

- 1.: un système
- 2.: une montre
- 3.: un dispositif électronique de géolocalisation
- 4.: un mouvement horloger électronique
- 5.: une interface d'affichage
- 6a.: un cadran
- 6b.: une lunette
- 6c.: un écran
- 7a.: une première aiguille
- 7b.: une deuxième aiguille
- 7c.: une troisième aiguille
- 8.: une unité de traitement du mouvement
- 9.: un module de communication
- 10.: au moins un moteur
- 11.: un module de diffusion sonore
- 12.: une boussole électronique
- 13.: des capteurs de mesures d'au moins un mouvement
- 14.: une échelle de temps
- 15.: un boitier de la montre
- 16.: un élément de saisie tactile ou vocale
- 17.: un module électronique
- 18.: un module de communication
- 19.: une unité de localisation
- 20.: un boitier du dispositif
- 21.: un microprocesseur du module électronique

## Revendications

1. Système (1) de navigation configuré pour guider un utilisateur sur un parcours conduisant à un lieu géographique déterminé, le système (1) comprenant une montre (2) et un dispositif électronique de géolocalisation (3) sans fil apte à générer des données de guidage relatives audit parcours, ladite montre (2) comportant un mouvement horloger électronique (4) et une interface d'affichage (5) mettant en oeuvre alternativement un mode d'affichage d'informations horlogères et un mode d'affichage d'informations de guidage résultant des dites données de guidage à partir d'au moins une première aiguille (7a) et d'une deuxième aiguille (7b) comprises dans ladite interface (5), lesdites informations de guidage étant relatives à des indications d'une direction de consigne à suivre pour atteindre ledit lieu géographique et à un temps de parcours estimé jusqu'au prochain changement de direction.

2. Système (1) selon la revendication précédente, dans lequel le mouvement horloger (4) comprend une unité de traitement (8) connectée à une boussole électronique (12), à un module de communication (9) et à au moins un moteur (10) pour animer d'un mouvement la première aiguille (7a) du mouvement horloger (4), l'unité de traitement (8) exécutant un algorithme de guidage lors du mode d'affichage d'informations de guidage, orientant une extrémité libre de la première aiguille (7a) vers la direction de consigne à suivre pour atteindre ledit lieu géographique à partir des données de guidage reçues du dispositif électronique (3) et des données d'orientation de la boussole électronique (12).

3. Système (1) selon l'une quelconque des revendications précédentes, dans lequel le mouvement horloger (4) comprend une unité de traitement (8) connectée à un module de diffusion sonore (11) et à au moins un moteur (10) pour animer d'un mouvement les aiguilles (7a, 7b), l'unité de traitement (8) exécutant un algorithme de guidage lors des modes d'affichage d'informations horlogères et de guidage, engendrant une notification d'un message visuel et sonore pour annoncer/avertir d'un changement de direction.

4. Système (1) selon la revendication 2, dans lequel l'interface d'affichage (5) comporte une échelle de temps (14) et le mouvement comprend l'unité de traitement (8) connectée audit au moins un moteur (10) pour animer d'un mouvement la deuxième aiguille (7b), ladite unité de traitement (8) exécutant ledit algorithme de guidage lors du mode d'affichage d'informations de guidage, configurant le positionnement de la deuxième aiguille (7b) par rapport à ladite échelle de temps (14) comprise dans l'interface d'affichage (5) en indiquant le temps de parcours estimé jusqu'au prochain changement de direction.

5. Système (1) selon l'une quelconque des revendications précédentes, dans lequel lors du mode d'affichage d'informations de guidage la première aiguille (7a) est susceptible d'être animée d'un mouvement de rotation dans le sens horaire et le sens antihoraire en fonction des instructions de contrôle du mouvement de cette première aiguille (7a) générées par l'unité de traitement (8) en fonction des données de guidage reçues du dispositif électronique (3) et des données d'orientation de la boussole électronique (12).

6. Système (1) selon l'une quelconque des revendications précédentes, dans lequel lors du mode d'affichage d'informations de guidage la deuxième aiguille (7b) est animée en permanence d'un mouvement de rotation uniforme uniquement dans le sens horaire jusqu'à être superposée à la première aiguille (7a) où son mouvement s'arrête et ce, en fonction des instructions de contrôle du mouvement de cette deuxième aiguille (7b) générées par l'unité de traitement (8) à partir d'un calcul du temps estimé du prochain changement de direction.

7. Système (1) selon l'une quelconque des revendications précédentes, dans lequel ladite interface d'affichage (5) comprend un cadran (6a), un rehaut et/ou une lunette (6b) chacun étant pourvu d'une échelle de temps (14).

8. Système (1) selon la revendication précédente, dans lequel ledit cadran (6a) comprend une partie incluant un écran configuré pour afficher les informations de guidage relatives audit lieu géographique telles que la topologie des intersections lors de changement de direction qui sont comprises dans le parcours et au temps restant pour atteindre une arrivée du parcours correspondant au lieu géographique.

9. Système (1) selon l'une quelconque des revendications précédentes, dans lequel le mouvement horloger (4) comporte une unité de traitement (8) et un moteur (10) d'entrainent desdites aiguilles (7a, 7b), ladite unité étant apte à piloter le moteur (10) afin de positionner les aiguilles (7a, 7b) pour l'affichage de l'heure ou des informations relatives audit lieu géographique.

10. Système (1) selon l'une quelconque des revendications précédentes, dans lequel le mouvement comprend une unité de traitement (8) connectée à des capteurs de mesures (13) du mouvement susceptible d'être effectuée par la montre (2), l'unité de traitement (8) exécutant un algorithme de sélection du modes d'affichage en fonction d'un premier mouvement de la montre (2) spécifique à la sélection du mode d'affichage d'informations de guidage ou d'un deuxième mouvement de cette montre (2) spécifique à la sélection du mode d'affichage d'informations horlogères.

11. Système (1) selon l'une quelconque des revendications précédentes, dans lequel lors du mode d'affichage d'informations horlogères la première aiguille (7a) est une aiguille des heures et la deuxième aiguille (7b) une aiguille des minutes.

12. Système (1) selon l'une quelconque des revendications précédentes, dans lequel le dispositif électronique de géolocalisation (3) est configuré pour générer des données de guidage relatives audit parcours, lesdites données étant transmises à ladite montre (2).
